# EUROPÄISCHE PATENTSCHRIFT

(11) **EP 1 508 485 B1**
(45) Veröffentlichungstag und Bekanntmachung des Hinweises auf die Patenterteilung: **27.07.2011**
(21) Anmeldenummer: 03018856.9
(22) Anmeldetag: 19.08.2003
(51) Int. Cl.: B60R 21/16

(54) **Airbagmodul**
Airbag module
Module de coussin gonflable

(43) Veröffentlichungstag der Anmeldung: 23.02.2005
(73) Patentinhaber: Autoliv Development AB, 447 83 Vårgårda (SE)
(72) Erfinder: Guthke, Detlev, 58089 Hagen (DE); Maiwald, Helmut, 51515 Kürten (DE)
(74) Vertreter: Schön, Thilo

(56) Entgegenhaltungen:
- US-A- 5 464 250
- US-A- 5 577 765
- US-A- 5 586 782
- US-A- 5 791 685
- US-A- 5 906 391
- US-A- 5 924 721

## Beschreibung

Die Erfindung betrifft ein Luftsackmodul einer Seitenairbaganordnung für Kraftfahrzeuge mit einem eine Luftsackhülle umfassenden Luftsack gemäß den Merkmalen des Oberbegriffs des Anspruchs 1. Ein derartiges Luftsackmodul ist aus der US 5,464,250 A1 bekannt.

Luftsackmodule der eingangs genannten Art werden zum Schutz von Insassen eines Kraftfahrzeuges bei einem Seitenaufprall eingesetzt. Dies kann in manchen Fällen als nicht ausreichend empfanden werden, da man insbesondere im Hinblick auf zunehmend Verbreitung findende Geländewagen mit hohen Stoßstangen nach verbessertem Schutz durch Seitenairbags strebt.

Es ist das der Erfindung zugrunde liegende Problem (Aufgabe), ein Luftsackmodul der eingangs genannten Art zu schaffen, bei dem bei einem Seitenaufprall die Schutzwirkung für den Insassen des Kraftfahrzeuges verbessert ist und das sich gleichzeitig durch einen möglichst einfachen Aufbau auszeichnet, wobei insbesondere der Aufbau dergestalt sein soll, dass sich der Luftsack in herstellungstechnisch einfacher Weise an unterschiedliche Anforderungen anpassen lässt.

Die Lösung dieser Aufgabe erfolgt durch die Merkmale des Anspruchs 1 und insbesondere dadurch, dass die Luftsackhülle in mehrere Kammern unterteilt ist, die zeitlich aufeinanderfolgend aufblasbar sind, wobei im nicht aufgeblasenen Zustand zumindest drei Kammern vorgesehen sind, und wobei wenigstens eine als erstes aufblasbare, zum Schutz des Pelvisbereiches eines Fahrzeuginsassen dienende untere Kammer über wenigstens ein Verzögerungsmittel mit zumindest einer zum Schutz zumindest des Thoraxbereiches des Fahrzeuginsassen dienenden oberen Kammer in Verbindung steht, über die wiederum wenigstens eine dritte Kammer aufblasbar ist, die mit der oberen Kammer durch zumindest ein weitere Verzögerungsmittel verbunden ist.

Bei dem erfindungsgemäßen Luftsackmodul ist vorgesehen, dass die Luftsackhülle wenigstens eine untere Kammer zum Schutz des Pelvisbereiches eines Fahrzeuginsassen, zumindest eine obere Kammer zum Schutz des Thoraxbereiches und gegebenenfalls auch des Kopfbereiches des Fahrzeuginsassen und zumindest eine dritte Kammer umfasst. Die obere Kammer ist zeitverzögert zu der unteren Kammer und die dritte Kammer ist zeitverzögert zu der oberen Kammer aufblasbar. Die untere Kammer ist durch wenigstens ein Verzögerungsmittel mit der oberen Kammer und die dritte Kammer ist durch zumindest ein weiteres Verzögerungsmittel mit der oberen Kammer verbunden.

Das erfindungsgemäße Luftsackmodul zeichnet sich dadurch aus, dass bei noch nicht aufgeblasener oberer und dritter Kammer mit der als erstes aufblasbaren unteren Kammer im Pelvisbereich schnell ein Schutzpolster zur Verfügung steht, das nicht nur Aufprallenergie aufnehmen, sondern über das der Fahrzeuginsasse außerdem verschoben und somit auf Abstand zur Fahrzeugseitenwand gehalten werden kann, da die untere Kammer im Bereich der Hüfte auf den Insassen einwirkt. Hierfür ist zu Beginn nur eine relativ kleine Kammer erforderlich. Ein großflächiger Seitenschutz kann durch entsprechende Gestaltung der nachfolgenden Kammern sichergestellt werden, wobei die dritte Kammer in Abhängigkeit von den jeweiligen Anforderungen gezielt ausgelegt und positioniert werden kann.

Die untere Kammer und die obere Kammer sind derart aufblasbar, dass bei noch nicht aufgeblasener dritter Kammer der Luftsack einen vorübergehenden, zumindest den Pelvis- und Thoraxbereich des Fahrzeuginsassen schützenden Zwischenzustand einnimmt. Auf diese Weise wird erreicht, dass sich der Luftsack bei noch nicht aufgeblasener dritter Kammer zumindest bzgl. der vertikalen Richtung bereits komplett in Position befindet..

Vorteilhafte Ausführungsformen der Erfindung sind in den Unteransprüchen, der Beschreibung und der Zeichnung angegeben.

Gemäß einer vorteilhaften Weiterbildung der Erfindung weist der Luftsack wenigstens eine innerhalb der Luftsackhülle befindliche Zwischenlage auf, durch welche die untere Kammer und die dritte Kammer voneinander getrennt sind.

Eine weitere vorteilhafte Ausführungsform zeichnet sich dadurch aus, dass die dritte Kammer unterhalb der oberen Kammer und zumindest bereichsweise neben der unteren Kammer angeordnet ist. Auf diese Weise kann die dritte Kammer zum Schutz zumindest des Pelvisbereiches des Insassen vorgesehen sein und beim Aufblasen des Luftsacks wenigstens bereichsweise die Schutzwirkung der unteren Kammer unterstützen und/oder übernehmen.

Vorzugsweise ist ferner vorgesehen, dass der Luftsack im vollständig aufgeblasenen Zustand zumindest im Wesentlichen frei von konkav geformten Außenflächenbereichen ist. Hierdurch wird erreicht, dass der Luftsack im vollständig aufgeblasenen Zustand keine wesentliche Einschnürung aufweist, wie sie beispielsweise durch eine zwei Kammern voneinander trennende Naht entstünde, so dass insgesamt der Luftsack sozusagen ein "harmonisches" Luftpolster ausbilden kann.

Es ist weiterhin bevorzugt, dass das Luftsackvolumen im vollständig aufgeblasenen Zustand durch die obere Kammer und die dritte Kammer gebildet ist. Auf diese Weise ist es insbesondere möglich, dass bei aufgeblasener oberer und dritter Kammer das Gasvolumen der unteren Kammer zumindest wesentlich reduziert ist und die dritte Kammer die Schutzfunktion der anfangs aufgeblasenen unteren Kammer teilweise oder vollständig übernehmen kann. Vorzugsweise zeichnet sich der vollständig aufgeblasene Zustand dadurch aus, dass nur ein einziges Gasvolumen innerhalb der Luftsackhülle und praktisch keine Kammerstruktur mehr vorhanden ist.

Des Weiteren kann erfindungsgemäß vorgesehen sein, dass die dritte Kammer ausschließlich über die obere Kammer aufblasbar ist. Es ist insbesondere vorgesehen, dass zwischen der unteren Kammer und der dritten Kammer keine direkte Strömungsverbindung besteht. Hierdurch wird erreicht, dass das Aufblasverhalten der dritten Kammer im Wesentlichen durch das weitere Verzögerungsmittel zwischen der oberen Kammer und der dritten Kammer bestimmt ist.

Insbesondere kann bei gezielt langer oder "unendlich langer" Verzögerung des weiteren Verzögerungsmittels, beispielsweise einer Naht, die absichtlich so beschaffen ist, dass sie bei den erwarteten Belastungen beim Auf blasen des Luftsacks nicht reißt, und somit das Einströmen von Gas beim Aufblasen des Luftsacks in die dritte Kammer zumindest weitgehend verhindert, gewährleistet werden, dass der Luftsack seine volle Schutzfunktion praktisch auch ohne die dritte Kammer erfüllen kann.

Nach einer weiteren Ausbildung der Erfindung kann bei aufgeblasener unterer Kammer und aufgeblasener oberer Kammer das Volumen der unteren Kammer kleiner sein als die Hälfte, insbesondere als ein Drittel, des Gesamtvolumens der beiden Kammern. Auf diese Weise wird ein schnelles Füllen der unteren Kammer erreicht, so dass bei aufgeblasener unterer Kammer und noch nicht aufgeblasener oberer und dritter Kammer schnell ein hoher Druck in der unteren Kammer erreicht werden kann und die relative Anordnung der unteren Kammer bezüglich der Position des Insassen im Kraftfahrzeug eine Verschiebung des Insassen im Pelvisbereich ermöglicht.

Um den Luftsack und dessen Aufblasverhalten auf unterschiedliche Anforderungen z.B. in Abhängigkeit von den jeweiligen Fahrzeuggegebenheiten einstellen zu können, kann das Verzögerungsmittel zwischen der unteren Kammer und der oberen Kammer als Überströmengstelle ausgebildet sein. Insbesondere die Größe und die Position der Überströmengstelle können variiert werden, um das Aufblasverhalten gezielt zu beeinflussen.

Die Überströmengstelle kann durch zumindest eine Naht festgelegt sein, durch die bevorzugt eine Zwischenlage und eine Außenlage des Luftsacks miteinander vernäht sind, die die untere Kammer zumindest bereichsweise begrenzen.

Zusätzlich oder alternativ kann das Verzögerungsmittel zwischen der unteren Kammer und der oberen Kammer durch Faltung der Luftsackhülle gebildet sein.

Das weitere Verzögerungsmittel zwischen der oberen Kammer und der dritten Kammer kann ein durch die Gasströmung zu beseitigendes oder zu zerstörendes Hindernis umfassen und insbesondere als Aufreißnaht ausgebildet sein. Hierdurch ist sichergestellt, dass die obere Kammer bei nicht aufgeblasener dritter Kammer bis auf einen einer Belastungsgrenze des weiteren Verzögerungsmittels entsprechenden Druck aufgeblasen werden kann, bevor das Hindernis des weiteren Verzögerungsmittels beseitigt oder zerstört wird.

Das Hindernis des weiteren Verzögerungsmittels kann durch Vernähen, Verweben, Verkleben und/oder Verschweißen der Luftsackhülle gebildet sein. Es kann beispielsweise durch eine Silikonverbindung gebildet sein. Das weitere Verzögerungsmittel kann auch als Faltung ausgeführt sein.

Die Erfindung wird im Folgenden beispielhaft unter Bezugnahme auf die Zeichnung beschrieben. Es zeigen:
- Fig. 1: eine schematische Seitenansicht eines ausgebreiteten Luftsacks, dessen Luftsackhülle in drei Kammern unterteilt ist, gemäß der Erfindung,
- Fig. 2: eine vereinfachte schematische Darstellung des Kammersystems des Luftsacks von Fig. 1, und
- Fig. 3a - 3d: schematische Ansichten eines erfindungsgemäßen Luftsacks während des Aufblasvorgangs.

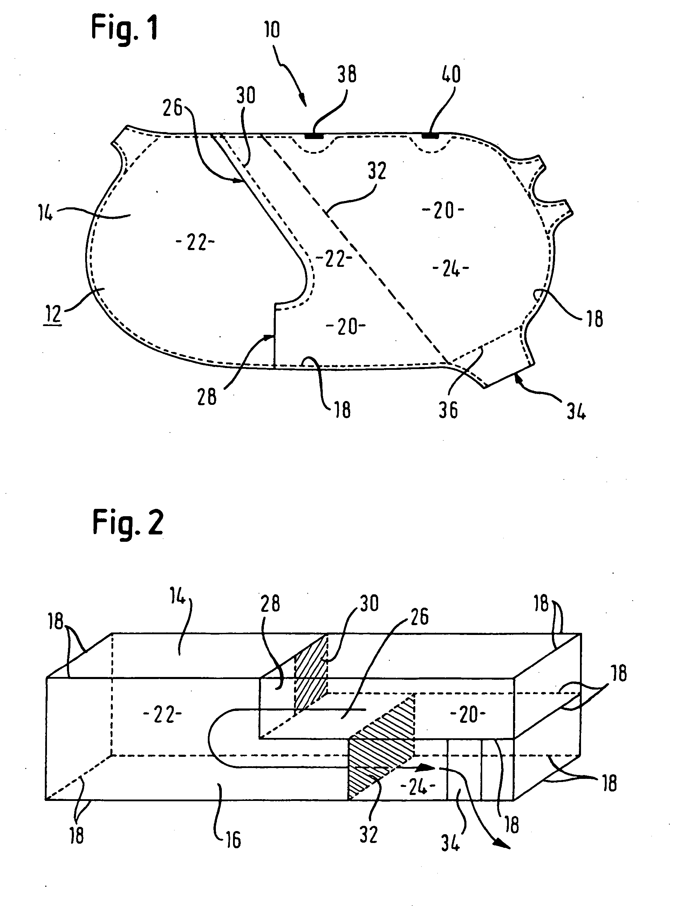

Das in Fig. 1 gezeigte erfindungsgemäße Luftsackmodul weist einen Luftsack 10 auf, der in einem ausgebreiteten Zustand dargestellt ist. Der Luftsack 10 umfasst eine Luftsackhülle 12, die durch Vernähen zweier übereinander liegender, im Wesentlichen deckungsgleicher Luftsackhüllenabschnitte 14, 16 mittels Randnähten 18 gebildet ist, wobei in Fig. 1 lediglich der vordere Luftsackhüllenabschnitt 14 der Luftsackhülle 12 dargestellt ist.

Die Luftsackhülle 12 ist in eine untere Kammer 20, eine obere Kammer 22 und eine dritte Kammer 24 unterteilt. Die untere Kammer 20 und die obere Kammer 22 dienen bereits bei noch nicht aufgeblasener dritter Kammer 24 zum Schutz des Pelvis- und zumindest des Thoraxbereiches eines Insassen eines Kraftfahrzeuges bei einem Seitenaufprall. Die Schutzwirkung der oberen Kammer 22 kann sich bei entsprechender Länge der oberen Kammer 22 auch auf den Kopfbereich des Insassen erstrecken.

Der sich in Fig. 1 in horizontale Richtung erstreckende Luftsack 10 kann in einem Kraftfahrzeug in im Wesentlichen vertikaler Richtung montiert werden, um so den Schutz des Pelvis-, Thorax- und gegebenenfalls auch des Kopfbereiches der Insassen zu gewährleisten. Im Folgenden wird das in Fig. 1 dargestellte rechte bzw. linke Ende des Luftsacks 10 mit unten bzw. oben bezeichnet.

Die untere Kammer 20 und die obere Kammer 22 sind aneinandergrenzend und bereichsweise überlappend angeordnet und bilden gemeinsam die in Fig. 1 horizontal dargestellte Längserstreckung des Luftsacks 10 aus. Die dritte Kammer 24 ist unterhalb der oberen Kammer 22 und in der in Fig. 1 gezeigten Ansicht des ausgebreiteten Zustands des Luftsacks 10 vollständig hinter der unteren Kammer 20 angeordnet. Die obere Kammer 22 ist bereichsweise hinter der unteren Kammer 20 angeordnet.

Das Gasvolumen, welches die untere Kammer 20 im aufgeblasenen Zustand aufnehmen kann, ist kleiner als das Gasvolumen, welches die obere Kammer 22 im aufgeblasenen Zustand aufnehmen kann, wobei das Verhältnis der beiden Gasvolumina insbesondere 1:2 betragen oder die untere Kammer 20 noch kleiner ausgeführt sein kann. Grundsätzlich sind aber die Größenverhältnisse der Kammern untereinander beliebig in Abhängigkeit von dem jeweiligen Anwendungsfall variierbar.

Etwa in der unteren Hälfte der Luftsackhülle 12 ist innerhalb der Luftsackhülle 12 eine Zwischenlage 26 vorgesehen, die die dritte Kammer 24 und bereichsweise die obere Kammer 22 von der unteren Kammer 20 abtrennt. Die Zwischenlage 26 ist insbesondere ohne jegliche Mittel ausgebildet, die die untere Kammer 20 und die dritte Kammer 24 strömungstechnisch unmittelbar miteinander verbänden. Die dritte Kammer 24 ist ausschließlich über die obere Kammer 22 aufblasbar.

Die Zwischenlage 26 ist im unteren Bereich des Luftsacks 10 mittels der Randnähte 18 mit der Luftsackhülle 12 vernäht und erstreckt sich über die gesamte Breite des Luftsacks 10. Die untere Kammer 20 bzw. dritte Kammer 24 ist zumindest bereichsweise durch die Zwischenlage 26 und den vorderen Luftsackhüllenabschnitt 14 bzw. den hinteren Luftsackhüllenabschnitt 16 der Luftsackhülle 12 begrenzt.

Die untere Kammer 20 und die obere Kammer 22 sind durch ein Verzögerungsmittel 28, in dem dargestellten Ausführungsbeispiel durch eine Überströmengstelle 28 miteinander verbunden. Die Überströmengstelle 28 ist durch eine Naht 30 festgelegt, durch die die innerhalb der Luftsackhülle 12 angeordnete Zwischenlage 26 mit dem vorderen Luftsackhüllenabschnitt 14 der Luftsackhülle 12 vernäht ist und die sich nicht über die ganze Breite des Luftsacks 10 erstreckt. Die obere Kammer 22 ist über die untere Kammer 20 und zeitlich versetzt zu der unteren Kammer 20 aufblasbar. Alternativ oder zusätzlich zu der Überströmengstelle 28 kann das Verzögerungsmittel 28 als Faltung des Luftsacks 10 ausgebildet sein.

Die obere Kammer 22 und die dritte Kammer 24 sind durch ein weiteres Verzögerungsmittel 32, in dem dargestellten Ausführungsbeispiel durch eine Reißnaht 32 miteinander verbunden. Die Reißnaht 32 befestigt die Zwischenlage 26 an dem hinteren Luftsackhüllenabschnitt 16 der Luftsackhülle 12 und erstreckt sich über die gesamte Breite des Luftsacks 10.

Die Reißnaht 32 stellt ein beim Aufblasen des Luftsacks 10 durch den Druck in der oberen Kammer 22 zu beseitigendes oder zu zerstörendes Hindernis dar, so dass die dritte Kammer 24 vor dem Aufreißen der Reißnaht 32 vollständig von der oberen Kammer 22 getrennt ist. Die dritte Kammer 24 ist nach dem Aufreißen der Reißnaht 32 über die obere Kammer 22 und zeitlich versetzt zu der oberen Kammer 22 aufblasbar.

Die Reißnaht 32 kann durch Vernähen, Verweben, Verkleben oder Verschweißen der Luftsackhülle 12 oder durch jede andere beliebige Verbindungstechnik gebildet sein. Die Reißnaht 32 kann unter entsprechender Belastung auf ihrer gesamten Länge oder aber lediglich in Teilbereichen aufreißbar ausgeführt sein.

Um ein Ausströmen des Gases aus dem aufgeblasenen Luftsack 10 zu ermöglichen, weist der Luftsack eine der dritten Kammer 24 zugeordnete Ausströmöffnung 34 auf. Um ein Ausströmen des Gases aus der unteren Kammer 20 durch die Ausströmöffnung 34 zu verhindern, ist die Zwischenlage 26 im Bereich der Ausströmöffnung 34 mit dem vorderen Luftsackhüllenabschnitt 14 mittels einer Naht 36 vernäht. Zum Einführen eines Gasgenerators in den Luftsack 10, insbesondere in dessen untere Kammer 20, und zum Hinausführen von Befestigungslaschen des Gasgenerators durch die Luftsackhülle 12 weist das Luftsackmodul zwei Öffnungen 38, 40 auf.

In Fig. 2 ist das Kammersystem des erfindungsgemäßen Luftsackmoduls stark vereinfacht und schematisiert dargestellt, um den zu Fig. 1 erläuterten Aufbau und die an anderer Stelle näher erläuterte Funktionsweise des Kammersystems zu veranschaulichen.

Die perspektivische Ansicht des Kammersystems in Fig. 2 zeigt die untere Kammer 20, die obere Kammer 22 und die dritte Kammer 24, sowie die innerhalb des Luftsacks 10 angeordnete Zwischenlage 26. Die Randnähte 18, die Naht 30 und das weitere Verzögerungsmittel 32 sind nur der Einfachheit halber flächig gezeichnet. Die stark vereinfacht dargestellte strömungstechnische Verbindung der Kammern 20, 22 und 24 ist in Fig. 2 durch einen Pfeil veranschaulicht.

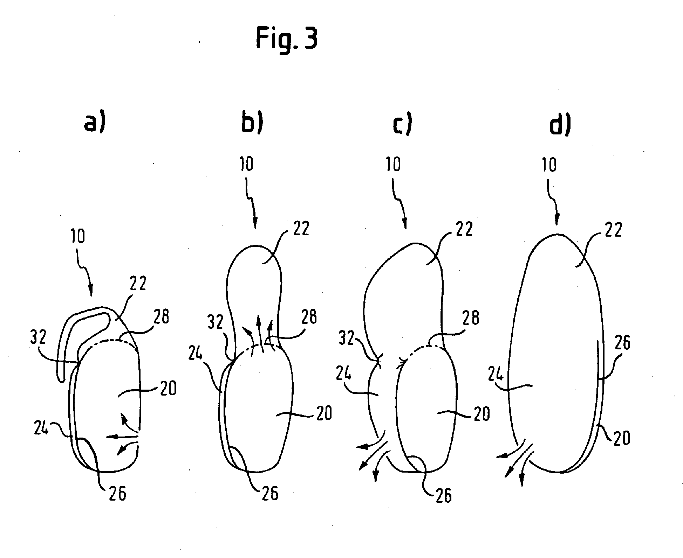

Nachfolgend wird der Aufblasvorgang eines erfindungsgemäßen Luftsackmoduls unter Bezugnahme auf die Fig. 3a - d beschrieben:

Nach dem Auslösen des Gasgenerators wird gemäß Fig. 3a in einer ersten Phase zunächst nur die untere Kammer 20 aufgeblasen. Das als Überströmengstelle ausgebildete Verzögerungsmittel 28 und/oder die Faltung des Luftsacks zwischen der unteren Kammer 20 und der oberen Kammer 22 verhindert, dass ein signifikanter Teil des in die untere Kammer 20 eingeblasenen Gases zu früh in die obere Kammer 22 überströmen kann, so dass zunächst im Wesentlichen nur die untere Kammer 20 aufgeblasen wird.

Aufgrund der vergleichsweise kleinen Dimensionierung der unteren Kammer 20, deren Fassungsvermögen insbesondere kleiner sein kann als das der oberen Kammer 22, kann die untere Kammer 20 sehr schnell aufgeblasen werden. Der relativ hohe Druck ermöglicht, dass der Insasse durch die dem Pelvisbereich zugeordnete untere Kammer 20 von der Fahrzeugseitenwand und/oder dem eindringenden Objekt weg verschoben werden kann und so durch die untere Kammer 20 geschützt und auf Abstand von der Fahrzeugseitenwand bzw. dem eindringenden Objekt gehalten wird.

In einer zweiten Phase gemäß Fig. 3b strömt Gas der aufgeblasenen unteren Kammer 20 durch die Überströmengstelle 28 in die bislang nicht oder nur zu einem geringen Teil aufgeblasene obere Kammer 22, so dass die obere Kammer 22 zeitlich nach der unteren Kammer 20 aufgeblasen wird. Das Aufblasverhalten des Luftsacks 10 kann insbesondere durch die Größe und Position der Überströmengstelle 28 beeinflusst und an unterschiedliche Anforderungen angepasst werden.

Die Reißnaht 32 ist zu diesem Zeitpunkt noch intakt und verhindert ein Einströmen des in der oberen Kammer 22 befindlichen Gases in die dritte Kammer 24. In dem in Fig. 3b dargestellten Zwischenzustand ist der Luftsack 10 zumindest bezüglich seiner Längserstreckung bereits komplett in Position und kann den Pelvis-, Thorax- und gegebenenfalls auch den Kopfbereich des Fahrzeuginsassen schützen. Die dritte Kammer 24 ist noch nicht aufgeblasen und liegt an der Zwischenlage 26 an, die die aufgeblasene untere Kammer 20 bereichsweise begrenzt.

Steigt der Druck der oberen Kammer 22 über die Belastungsgrenze der Reißnaht 32, reißt diese auf und das Einströmen von Gas aus der oberen Kammer 22 in die dritte Kammer 24 wird ermöglicht, wie in Fig. 3c durch eine dritte Phase veranschaulicht ist.

Die aufgeblasene dritte Kammer 24 unterstützt zunächst und übernimmt dann die Schutzfunktion der unteren Kammer 20, so dass bei vollständig aufgeblasenem Luftsack 10 gemäß Fig. 3d das Luftsackvolumen im Wesentlichen durch die obere Kammer 22 und die dritte Kammer 24 gebildet wird und das Gasvolumen der unteren Kammer 20 zumindest wesentlich reduziert ist. Das Zusammenspiel der unteren Kammer 20 und der dritten Kammer 24 kann gezielt z.B. durch Variieren der Kammervolumina oder des Verhaltens der Verzögerungsmittel 28, 32 eingestellt werden.

Ist die Reißnaht 32 auf der ganzen Breite des Luftsacks 10 beseitigt oder zerstört, besteht der Luftsack 10 gewissermaßen nur noch aus einer einzigen Kammer, die die obere Kammer 22 und die dritte Kammer 24 vereint, so dass der Luftsack 10 zumindest keine wesentlichen Einschnürungen aufweist und frei ist von konkav geformten Außenflächenbereichen.

Ein erfindungsgemäßes Luftsackmodul gemäß der Fig. 3a - d zeichnet sich folglich durch einen in drei Phasen ablaufenden Aufblasvorgang mit einer verbesserten Schutzwirkung für den Insassen des Kraftfahrzeugs aus. Die erste Phase stellt schnell eine aufgeblasene untere Kammer 20 zur Verfügung, die eine Verschiebung der Insassen im Pelvisbereich ermöglicht. Die zweite Phase bringt den Luftsack 10 bezüglich seiner Längserstreckung komplett in Position und die dritte Phase gibt das komplette Luftsackvolumen frei.

### Bezugszeichenliste

- 10: Luftsack
- 12: Luftsackhülle
- 14: vorderer Luftsackhüllenabschnitt
- 16: hinterer Luftsackhüllenabschnitt
- 18: Randnaht
- 20: untere Kammer
- 22: obere Kammer
- 24: dritte Kammer
- 26: Zwischenlage
- 28: Verzögerungsmittel
- 30: Naht
- 32: weiteres Verzögerungsmittel
- 34: Ausströmöffnung
- 36: Naht
- 38: Öffnung
- 40: Öffnung

## Patentansprüche

1. Luftsackmodul einer Seitenairbaganordnung für Kraftfahrzeuge mit einem eine Luftsackhülle (12) umfassenden Luftsack (10), wobei die Luftsackhülle (12) in mehrere Kammern (20, 22, 24) unterteilt ist, die zeitlich aufeinanderfolgend aufblasbar sind, wobei im nicht auf geblasenen Zustand zumindest drei Kammern (20, 22, 24) vorgesehen sind, und wobei wenigstens eine als erstes aufblasbare, zum Schutz des Pelvisbereiches eines Fahrzeuginsassen dienende untere Kammer (20) über wenigstens ein Verzögerungsmittel (28) mit zumindest einer zum Schutz zumindest des Thoraxbereiches des Fahrzeuginsassen dienenden oberen Kammer (22) in Verbindung steht, über die wiederum wenigstens eine dritte Kammer (24) aufblasbar ist, die mit der oberen Kammer (22) durch zumindest ein weiteres Verzögerungsmittel (32) verbunden ist,
**dadurch gekennzeichnet,**
**dass** die untere Kammer (20) und die obere Kammer (22) derart auf blasbar sind, dass bei noch nicht aufgeblasener dritter Kammer (24) der Luftsack (10) sich zumindest bezüglich der vertikalen Richtung bereits komplett in Position befindet und einen vorübergehenden, zumindest den Pelvis- und Thoraxbereich des Fahrzeuginsassen schützenden Zwischenzustand einnimmt.

2. Luftsackmodul nach Anspruch 1,
**dadurch gekennzeichnet,**
**dass** der Luftsack (10) wenigstens eine innerhalb der Luftsackhülle (12) befindliche Zwischenlage (26) aufweist, durch welche die untere Kammer (20) und die dritte Kammer (24) voneinander getrennt sind.

3. Luftsackmodul nach Anspruch 1 oder 2,
**dadurch gekennzeichnet,**
**dass** die dritte Kammer (24) unterhalb der oberen Kammer (22) und zumindest bereichsweise neben der unteren Kammer (20) angeordnet ist.

4. Luftsackmodul nach einem der vorhergehenden Ansprüche,
**dadurch gekennzeichnet,**
**dass** der Luftsack (10) im vollständig aufgeblasenen Zustand zumindest im Wesentlichen frei von konkav geformten Außenflächenbereichen ist.

5. Luftsackmodul nach einem der vorhergehenden Ansprüche,
**dadurch gekennzeichnet,**
**dass** das Luftsackvolumen im vollständig aufgeblasenen Zustand durch die obere Kammer (22) und die dritte Kammer (24) gebildet ist.

6. Luftsackmodul nach einem der vorhergehenden Ansprüche,
**dadurch gekennzeichnet,**
**dass** die dritte Kammer (24) ausschließlich über die obere Kammer (22) aufblasbar ist.

7. Luftsackmodul nach einem der vorhergehenden Ansprüche,
**dadurch gekennzeichnet,**
**dass** bei aufgeblasener unterer Kammer (20) und aufgeblasener oberer Kammer (22) das Volumen der unteren Kammer (20) kleiner ist als die Hälfte, insbesondere als ein Drittel, des Gesamtvolumens der beiden Kammern (20, 22).

8. Luftsackmodul nach einem der vorhergehenden Ansprüche,
**dadurch gekennzeichnet,**
**dass** das Verzögerungsmittel (28) zwischen der unteren Kammer (20) und der oberen Kammer (22) als Überströmengstelle (28) ausgebildet ist.

9. Luftsackmodul nach Anspruch 8,
**dadurch gekennzeichnet,**
**dass** die Überströmengstelle (28) durch zumindest eine Naht (30) festgelegt ist, durch die bevorzugt eine Zwischenlage (26) und eine Außenlage des Luftsacks (10) miteinander vernäht sind, die die untere Kammer (20) zumindest bereichsweise begrenzen.

10. Luftsackmodul nach einem der vorhergehenden Ansprüche,
**dadurch gekennzeichnet,**
**dass** das Verzögerungsmittel (28) zwischen der unteren Kammer (20) und der oberen Kammer (22) durch Faltung der Luftsackhülle (12) gebildet ist.

11. Luftsackmodul nach einem der vorhergehenden Ansprüche,
**dadurch gekennzeichnet,**
**dass** das weitere Verzögerungsmittel (32) zwischen der oberen Kammer (22) und der dritten Kammer (24) ein durch die Gasströmung zu beseitigendes oder zu zerstörendes Hindernis umfasst und insbesondere als Aufreißnaht (32) ausgebildet ist.

12. Luftsackmodul nach Anspruch 11,
**dadurch gekenntzeichnet,**
dass das Hindernis durch Vernähen, Verweben, Verkleben und/oder Verschweißen der Luftsackhülle (12) gebildet ist.

## Claims

1. Air bag module of a side airbag assembly for vehicles, with an air bag (10) including an air bag cover (12), wherein the air bag cover (12) is divided into several chambers (20, 22, 24), which are successively inflatable, wherein at least three chambers (20, 22, 24) are provided in the non-inflated condition, and wherein at least a lower chamber (20), being first inflatable and serving for protection of the pelvis area of a vehicle occupant, is connected, through at least one delay means (28), with at least an upper chamber (22), serving for protection of at least the chest area of the vehicle occupant, through which at least a third chamber (24) is inflatable, which is connected with the upper chamber (22) by at least another delay means (32),
**characterized in that**
the lower chamber (20) and the upper chamber (22) are inflatable such that the airbag (10) is, at least relative to the vertical direction, already completely in position, when the third chamber (24) is not yet inflated, and takes a temporary intermediate condition, protecting at least the pelvis and thorax areas of the vehicle occupant.

2. Air bag module according to claim 1,
**characterized in that**
the air bag (10) comprises at least one intermediate layer (26) within the air bag cover (12) which separates the lower chamber (20) and the third chamber (24).

3. Air bag module according to claim 1 or 2,
**characterized in that**
the third chamber (24) is provided below the upper chamber (22) and at least partially next to the lower chamber (20).

4. Air bag module according to one of the preceding claims,
**characterized in that**
the air bag (10) in the fully inflated condition is at least substantially free of concave-shaped exterior surface areas.

5. Air bag module according to one of the preceding claims,
**characterized in that**
the air bag volume is provided in the fully inflated condition by the upper chamber (22) and the third chamber (24).

6. Air bag module according to one of the preceding claims,
**characterized in that**
the third chamber (24) is inflatable exclusively through the upper chamber (22).

7. Air bag module according to one of the preceding claims,
**characterized in that**,
when the lower chamber (20) is inflated and the upper chamber (22) is inflated, the volume of the lower chamber (20) is less than half, in particular one third, of the total volume of the two chambers (20, 22).

8. Air bag module according to one of the preceding claims,
**characterized in that**
the delay means (28) between the lower chamber (20) and the upper chamber (22) is formed as an overflow bottleneck (28).

9. Air bag module according to claim 8,
**characterized in that**
the overflow bottleneck (28) is fixed by at least a seam (30) preferentially sewing together an intermediate layer (26) and an outer layer of the air bag (10) limiting the lower chamber (20) at least partially.

10. Air bag module according to one of the preceding claims,
**characterized in that**
the delay means (28) between the lower chamber (20) and the upper chamber (22) is formed by folding the air bag cover (12).

11. Air bag module according to one of the preceding claims,
**characterized in that**
the further delay means (32) between the upper chamber (22) and the third chamber (24) includes an obstacle to be eliminated or destructed by the gas flow and is provided in particular as a breaking seam (32).

12. Air bag module according to claim 11,
**characterized in that**
the obstacle is formed by sewing, weaving, gluing and/or welding the air bag cover (12).

## Revendications

1. Module de coussin gonflable d'un agencement d'airbag latéral pour véhicule automobile, comprenant un coussin gonflable (10) qui comprend une enveloppe de coussin (12), ladite enveloppe de coussin (12) étant subdivisée en plusieurs chambres (20, 22, 24) qui peuvent être gonflées temporellement les unes après les autres, et dans l'état non gonflé il est prévu au moins trois chambres (20, 22, 24), et au moins une chambre inférieure (20), gonflable en premier et servant à la protection de la région pelvienne d'un occupant du véhicule, communique via au moins un organe de retardement (28) avec au moins une chambre supérieure (22) servant à protéger au moins la région thoracique de l'occupant du véhicule, et via laquelle à nouveau au moins une troisième chambre (24) est gonflable qui est reliée à la chambre supérieure (22) par au moins un autre organe de retardement (32),
**caractérisé en ce que**
la chambre inférieure (20) et la chambre supérieure (22) sont gonflables de telle façon que lorsque la troisième chambre (24) n'est pas encore gonflée, le coussin gonflable (10) se trouve déjà complètement en position au moins par référence à la direction verticale et occupe un état intermédiaire temporaire qui protège au moins la région pelvienne et la région thoracique de l'occupant du véhicule.

2. Module de coussin gonflable selon la revendication 1,
**caractérisé en ce que**
le coussin gonflable (10) comprend au moins une couche intermédiaire (26) qui se trouve à l'intérieur de l'enveloppe (12) de coussin gonflable et au moyen de laquelle la chambre inférieure (20) et la troisième chambre (24) sont séparées l'une de l'autre.

3. Module de coussin gonflable selon la revendication 1 ou 2,
**caractérisé en ce que**
la troisième chambre (24) est agencée au-dessous de la chambre supérieure (22) et au moins localement à côté de la chambre inférieure (20).

4. Module de coussin gonflable selon l'une des revendications précédentes,
**caractérisé en ce que**
le coussin gonflable (10) dans l'état complètement gonflé est au moins essentiellement dépourvu de zones de surface extérieure à conformation concave.

5. Module de coussin gonflable selon l'une des revendications précédentes,
**caractérisé en ce que**
le volume du coussin gonflable, dans l'état complètement gonflé, est formé par la chambre supérieure (22) et par la troisième chambre (24).

6. Module de coussin gonflable selon l'une des revendications précédentes,
**caractérisé en ce que**
la troisième chambre (24) est gonflable exclusivement via la chambre supérieure (22).

7. Module de coussin gonflable selon l'une des revendications précédentes,
**caractérisé en ce que**,
quand la chambre inférieure (20) est gonflée et la chambre supérieure (22) est gonflée, le volume de la chambre inférieure (20) est inférieur à la moitié, en particulier à un tiers, du volume total des deux chambres (20, 22).

8. Module de coussin gonflable selon l'une des revendications précédentes,
**caractérisé en ce que**
l'organe de retardement (28) entre la chambre inférieure (20) et la chambre supérieure (22) est réalisé sous forme d'un emplacement rétréci (28) de déversement.

9. Module de coussin gonflable selon la revendication 8,
**caractérisé en ce que**
l'emplacement rétréci (28) de déversement est défini par au moins une couture (30) avec laquelle une couche intermédiaire (26) et une couche extérieure du coussin à gaz (10) sont cousues l'une avec l'autre, et qui délimite au moins localement la chambre inférieure (20).

10. Module de coussin gonflable selon l'une des revendications précédentes,
**caractérisé en ce que**
l'organe de retardement (28) entre la chambre inférieure (20) et la chambre supérieure (22) est formé par pliage de l'enveloppe (12) du coussin gonflable.

11. Module de coussin gonflable selon l'une des revendications précédentes,
**caractérisé en ce que**
l'autre organe de retardement (32) entre la chambre supérieure (22) et la troisième chambre (24) comprend un obstacle qui doit être supprimé ou détruit par l'écoulement de gaz, et est en particulier réalisé sous forme de cordon déchirable. (32).

12. Module de coussin gonflable selon la revendication 11,
**caractérisé en ce que**
l'obstacle est formé par couture, tissage, collage et/ou soudage de l'enveloppe de coussin gonflable (12).
